# EUROPEAN PATENT SPECIFICATION

(11) **EP 2 245 400 B1**
(45) Date of publication and mention of the grant of the patent: **22.07.2020**
(21) Application number: 08871222.9
(22) Date of filing: 18.11.2008
(51) Int. Cl.: F25D 23/02

(54) **REFRIGERATOR WITH A DOOR HINGE ASSEMBLY**
KÜHLSCHRANK MIT EINER TÜRSCHARNIERANORDNUNG
RÉFRIGÉRATEUR COMPRENANT UNE CHARNIÈRE DE PORTE

(30) Priority: 21.01.2008 KR 20080006101
(43) Date of publication of application: 03.11.2010
(73) Proprietor: LG Electronics Inc., Yeongdeungpo-Gu Seoul 07336 (KR)
(72) Inventor: KANG, Won-Sik, Gyoungsangnam-do 641-711 (KR)
(74) Representative: Plasseraud IP
(86) International application number: PCT/KR2008/006772
(87) International publication number: WO 2009/093800

(56) References cited:
- DE-A1- 4 328 821
- KR-A- 970 028 353
- KR-A- 20010 009 547
- KR-A- 20040 102 383
- KR-A- 20040 102 383

## Description

### Background

The present disclosure relates to a refrigerator with a door hinge assembly according to the preamble of claim 1. Such a refrigerator is known, for example, from KR 2004 0102383 A.

Generally, a refrigerator is an electrical appliance that keeps food fresh for a long time by maintaining an interior temperature thereof to be lower than an exterior temperature.

The refrigerator generates cool air as a refrigerant circulates a cooling cycle and supplies the cool air to a storage chamber to maintain the food in the storage chamber at a predetermined low temperature.

The storage chamber is defined by a main body of the refrigerator. In order to prevent the cool air in the storage chamber from leaking, a door is installed on the main body of the refrigerator. Generally, the door is pivotally installed on a side of the main body. At this point, a hinge unit may be provided on the main body to provide a pivot axis of the door.

Meanwhile, according to the related art refrigerator, the hinge unit cannot function to support the load of the refrigerator but simply provides the pivot axis.

In addition, as a volume of the refrigerator increases and thus a weight of the refrigerator door increases, the refrigerator door slips at a coupling portion to the hinge unit or droops.

Accordingly, the refrigerator door cannot pivot with it closely contacting the main body of the refrigerator and a step between the main body and the door is created. When the step increases above a predetermined level, the refrigerator door cannot smoothly pivot. Related prior art can be found for instance in KR 2004/0102383 A and DE 4328821 A1.

### Summary

According to the invention, there is provided a refrigerator as defined in claim 1. Embodiments provide a refrigerator, which is configured such that a hinge unit supports the load of a refrigerator door by improving structures of the hinge unit and refrigerator door.

Embodiments also provide a refrigerator, which is configured to reduce drooping of a refrigerator door by a hinge unit supporting the refrigerator door.

The refrigerator of the invention includes, in particular, a refrigerator door pivotally coupled to a main body of the refrigerator and provided with at least one groove; and a hinge unit enabling the refrigerator door to pivot, wherein the hinge unit includes: a hinge pin providing a pivot axis of the refrigerator door; and a hook member provided at a side of the hinge pin and inserted and hooked in the groove.

The details of one or more embodiments are set forth in the accompanying drawings and the description below. Other features will be apparent from the description and drawings, and from the claims.

According to the invention, with *a hook structure by which the refrigerator door is supported on the hinge unit, the drooping of the refrigerator due to the self-gravity of the refrigerator can be prevented.*

In addition, since a groove in which the hinge unit is inserted and coupled is formed on the refrigerator door, the hinge unit can be easily assembled with the refrigerator door.

Further, even when the refrigerator door is repeatedly opened and closed, the door does not droop and thus the refrigerator door can effectively seal the main body, thereby preventing the leakage of the cool air in the refrigerator to an external side.

### BRIEF DESCRIPTION OF THE DRAWINGS

Fig. 1 is a perspective view of a refrigerator according to an embodiment.
Fig. 2 is a perspective view of a hinge unit according to an embodiment.
Fig. 3 is a perspective view illustrating a structure by which the hinge unit is coupled to a refrigerator door.
Fig. 4 is a perspective view of a hook groove of a refrigerator door according to an embodiment.
Fig. 5 is a cross-sectional view taken along line II-II' of Fig. 3.
Fig. 6 is a cross-sectional view illustrating a state where a hinge unit is coupled to a refrigerator door according to an embodiment.
Fig. 7 is a cross-sectional view taken along line I-I' of Fig. 1.

### DETAILED DESCRIPTION OF THE EMBODIMENTS

Reference will now be made in detail to the embodiments of the present disclosure, examples of which are illustrated in the accompanying drawings. It should be understood that numerous other modifications and embodiments can be devised by those skilled in the art that will fall within the scope of the invention, as defined by the claims.

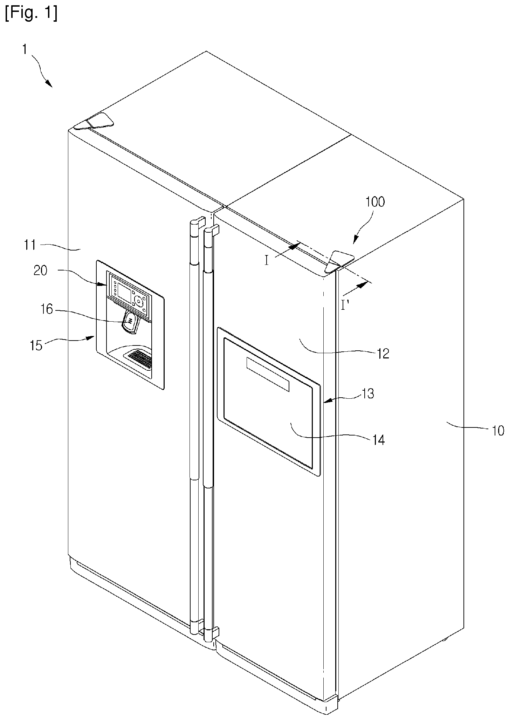

Fig. 1 is a perspective view of a refrigerator according to an embodiment.

Referring to FIG. 1, a refrigerator 1 according to an embodiment includes a main body 10 and freezing and chilling chamber doors 11 and 12 that are pivotally installed on a front portion of the main body 10 to selectively open and close respective freezing and chilling chambers.

In the embodiment, a side-by-side type refrigerator having freezing and chilling chambers disposed at left and right sides will be exemplarily described. However, it should be understood that the present disclosure is not limited to the side-by-side type refrigerator. That is, the concept of the present disclosure can be applied to not only a top mount type refrigerator having a freezing chamber provided above a chilling chamber but also a bottom freezer type refrigerator having a freezing chamber provided under a chilling chamber.

In more detail, the chilling chamber door 12 is provided with a home bar 13 that allows a user to take out food without opening the chilling chamber door 12. The home bar 13 includes a home bar door 14. Since the home bar 13 is opened only when it is required, the cool air outflow can be minimized.

A dispenser unit 15 is formed on the freezing chamber door 11 to allow the user to take ice or water at an exterior of the refrigerator 1. The dispenser unit 15 includes a dispensing lever 16 for dispensing the ice or water.

Meanwhile, although not shown in the drawing of FIG. 1, an ice-making apparatus and a water tank for storing the water may be further provided on the freezing chamber door 11.

A display unit 20 is provided on a front surface of the freezing chamber door 11 to display a current operation state of the refrigerator 1. The display unit may be detachably mounted on the freezing chamber door 11.

In more detail, the dispenser unit 15 is recessed into the freezing chamber door 11 and the water or ice is dispensed by manipulating the dispensing lever 16.

Meanwhile, hinge units 100 for providing a pivot axis of each of the refrigerator doors 12 and 13 during opening and closing of the refrigerator doors 12 and 13 are provided on the refrigerator main body 10.

The hinge units 100 are provided on the upper end of the main body 10 and coupled to respective upper ends of the refrigerator doors 12 and 13.

In the following description, an upper hinge unit provided at the upper portion of the refrigerator main body 10 will be exemplarily described. However, the hinge unit according to the embodiment is not limited to the upper hinge unit but applied to the intermediate or lower hinges.

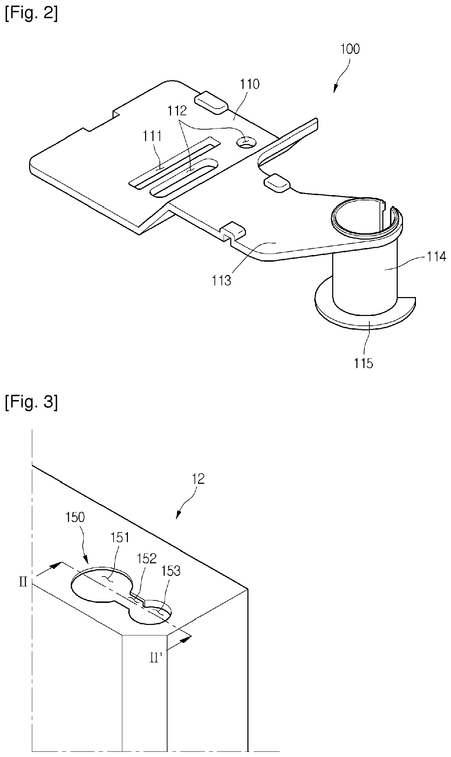

FIG. 2 is a perspective view of the hinge unit according to an embodiment.

Referring to FIG. 2, the hinge unit 100 according to the embodiment includes a hinge main body 110 fixed to the refrigerator main body 10, a pin connection member 113 extending outward from the hinge main body 110, a hinge pin 114 coupled to the pin connection member 113 and providing a pivot axis of the refrigerator door 11 (12). Here, the pin connection member 113 may be integrally formed with the hinge main body 110.

In more detail, the hinge main body 110 is provided with an insertion portion 111 in which a hinge bracket (not shown) is inserted such that the hinge main body 110 is coupled to the refrigerator main body 10. Here, a first side of the hinge bracket is coupled to the refrigerator main body 10 and a second side of the hinge bracket is inserted and hooked through the hinge main body 110.

The hinge main body 110 is provided with a coupling hole 112 through which a screw is coupled such that the hinge main body 110 is supported on the refrigerator main body 10.

The pin connection member 113 is formed in a plate shape extending outward from the hinge main body 110. The hinge pin 114 is coupled to a side of the pin connection member 113.

The hinge pin 114 is formed in a cylindrical shape. A first end portion of the pin connection member 113 is shaped to correspond to an outer circumference of the hinge pin 114. That is, the pin connection member 113 is coupled to the outer circumference of the hinge pin 114. On the contrary, the pin connection member 113 and the hinge pin 114 may be integrally formed with each other.

The hinge pin 113 extends downward from a coupling portion to the pin connection member 113.

A hook member 115 for hooking the hinge unit 100 on the refrigerator door 11 (12) is provided at a lower end of the hinge pin 114.

The hook member 115 extends outward from the hinge pin 114, enclosing the outer circumference of the hinge pin 114. That is, the hook member 115 has a greater diameter than the hinge pin 114.

Here, the hook member 115 may be designed to hole on a hook groove (that will be described later) of the refrigerator door 11 (12) during an assembling process of the hinge unit 100 with the refrigerator door 11 (12).

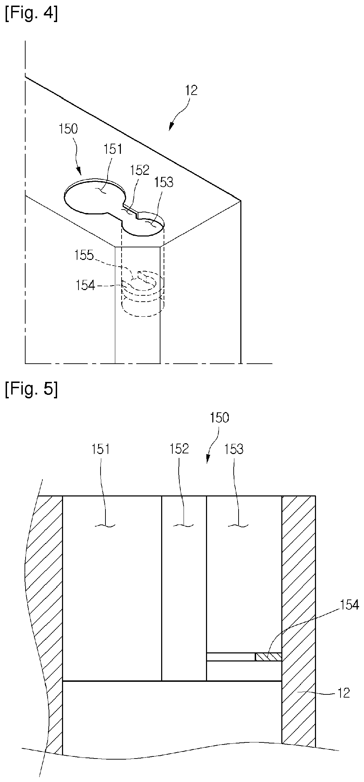

Fig. 3 is a perspective view of the refrigerator door to which the hinge unit is coupled, Fig. 4 is a perspective view illustrating the hook groove of the refrigerator door, and Fig. 5 is a cross-sectional view taken along line II-II'of Fig. 3.

Referring to Figs. 3 through 5, the chilling chamber door 12 according to the embodiment includes an assembling portion 150 to which the hinge unit 100 is coupled. The assembling portion 150 is formed through a top surface of the chilling chamber door 12.

In more detail, the assembling portion 150 includes an insertion groove 151 in which the hinge unit 100 is inserted during the assembling of the hinge unit 100 with the chilling chamber door 12, a hook groove 153 that is hooked with the hinge unit 100 in a state where the assembly of the hinge unit 100 is completed, and a connection groove 152 communicating the insertion groove 151 with the hook groove 153.

The insertion groove 151, hook groove 153, and connection groove 152 are formed by being depressed downward from the top surface of the chilling chamber door 12.

Here, depths of the grooves 151, 152, and 153 are determined to degrees to which the hinge pin 114 and hook member 115 are completely inserted. Further, bottom surfaces of the grooves 151, 152, and 153 are on the same horizontal plane.

The insertion groove 151 and hook groove 153 are formed to correspond to shapes of the hinge pin 114 and hook member 115 and have circular-shaped sections taken in the horizontal direction.

The insertion groove 151 has a greater diameter than the hook member 115 so that the hinge pin 114 and hook member 115 can be simultaneously inserted therein.

The connection groove 152 is sized such that the hinge pin 114 and hook member 115 are capable of moving therein. That is, a groove having a greater diameter than the hinge pin 114 and hook member 115 are formed at a location of the interior of the connection groove 152, which corresponds to the hinge pin 114 and hook member 115.

Meanwhile, a hook rib 154 that is hooked with the hook member 115 in a state where the hinge unit 100 is assembled with the chilling chamber door 12 is provided in the hook groove 153.

The hook rib 154 extends from and along the inner circumference of the hook groove 153. An inner surface of the hook rib 154 is shaped to correspond to an outer circumference of the hinge pin 114.

The hook rib 154 is spaced upward from a bottom surface of the hook groove 153 by a predetermined distance. The predetermined distance is greater than a height of the hook member 115. In this case, the hook member 115 may be positioned under the hook rib 154 in a state where the hinge pin 114 and hook member 115 are inserted in the hook groove 153.

Further, the hook rib 154 is provided with an opening portion, at least a portion of which is opened so that the hinge pin 114 can move from the connection groove 152 to the hook groove 153. Here, the opening portion 155 may be larger than a diameter of the hinge pin 114.

At this point, the opening portion 155 may be smaller than the hook member 115 to prevent the hook member 115 from being released from the hook rib 154.

The following will describe a process for assembling the hinge unit 100 with the chilling chamber door 12 with reference to the accompanying drawings.

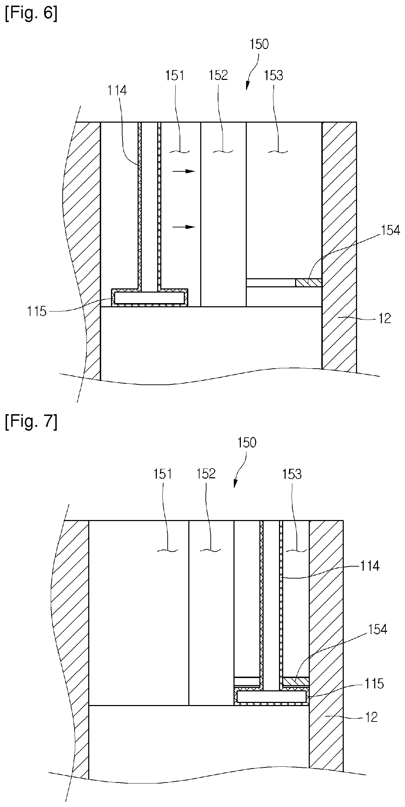

Fig. 6 is a cross-sectional view illustrating a state where the hinge unit is coupled to the refrigerator door according to the embodiment, and Fig. 7 is a cross-sectional view taken along line I-I' of Fig. 1.

Referring to Figs. 6 and 7, the hinge unit 100 according to the embodiment is inserted into the insertion hole 151 of the chilling chamber door 12 and hooked in the hook groove 153.

That is, the hinge pin 114 and hook member 115 of the hinge unit 100 are simultaneously inserted into the insertion groove 151.

Further, in a state where the hinge pin 114 and hook member 115 are inserted into the insertion groove 151, the hinge pin 114 and hook member 115 may move to the hook groove 153 via the connection groove 152.

In addition, when the hinge pin 114 is completely inserted into the hook groove 153, the hook member 115 is positioned under the hook rib 154 such that the hinge unit 100 is assembled with the refrigerator door 11 (12).

Meanwhile, when the hinge unit 100 is assembled with the chilling chamber door 12 and thus the chilling chamber door 12 is installed on the main body 10 to be capable of pivoting, the chilling chamber door 12 applies force downward due to its self-gravity. Since the force is applied downward to the hook rib 154, the top surface of the hook member 115 may contact the undersurface of the hook rib 154.

As a result, the hook rib 154 is supported by the hook member 115 and thus the chilling chamber door 12 can be supported by the hinge unit 100.

In this case, the downward slipping and drooping of the chilling chamber door 12 due to the self-gravity of the chilling chamber door 12 can be prevented. Further, even when the doors 11 and 12 are repeatedly opened and closed, the doors do not droop.

In addition, in a state where the doors 11 and 12 close the front portion of the main body 10, the doors 11 and 12 can easily closely contact the main body 10.

As a result, the doors 11 and 12 close the main body 10 and thus the cool air leakage out of the interior of the refrigerator can be prevented.

Although embodiments have been described with reference to a number of illustrative embodiments thereof, it should be understood that numerous other modifications and embodiments can be devised by those skilled in the art that will fall within the scope of the invention, as defined by the appended claims.

By improving the structures of the hinge unit and refrigerator door according to the embodiment, the drooping of the refrigerator door can be prevented and the refrigerator door can effectively close the main body. Therefore, the industrial applicability is remarkably high.

## Claims

1. A refrigerator (1) with a door hinge assembly, comprising:
a refrigerator door (11, 12) pivotally coupled to a main body (10) of the refrigerator (1) and provided with at least one groove (151, 152, 153); and
a hinge unit (100) enabling the refrigerator door (11, 12) to pivot, wherein the hinge unit (100) comprises:
a hinge pin (114) providing a pivot axis of the refrigerator door (11, 12); and
a hook member (115) provided at a side of the hinge pin (114) and inserted and hooked in the at least one groove (151, 152, 153),
**characterized in that** the at least one groove (151, 152, 153) comprises an insertion groove (151) in which the hinge pin (114) and the hook member (115) are inserted during assembly, a hook groove (153) provided with a hook rib (154) hooked on the hook member (115),
and a connection groove (152) communicating the insertion groove (151) with the hook groove (153), the insertion groove (151), the connection groove (152) and the hook groove (153) being depressed downward from a top surface of the refrigerator door (11, 12), and
wherein, during assembly, the hinge pin (114) moves from the insertion groove (151) to the hook groove (153) sideward via the connection groove (152) and the hook member (115) is hooked on the hook rib (154).

2. The door hinge assembly according to claim 1, wherein the hook member (115) extends outward from the hinge pin (114).

3. The door hinge assembly according to claim 1, wherein the hook member (115) is formed to surround an outer circumference of a lower end of the hinge pin (114).

4. The door hinge assembly according to claim 1, wherein bottom surfaces of the insertion groove (151) and hook groove (153) are on a same horizontal plane.

5. The door hinge assembly according to claim 1, wherein the hook rib (154) extends from and along an inner circumference of the hook groove (153).

6. The door hinge assembly according to claim 1, wherein the hook member (115) supports a lower portion of the hook rib (154) when the refrigerator door (11, 12) is pivotally coupled to the main body (10).

7. The door hinge assembly according to claim 1, wherein when the hinge pin (114) is completely inserted into the hook groove (153), the hook member (115) is positioned under the hook rib (154) such that the hinge unit (100) is assembled with the refrigerator door (11, 12).

## Patentansprüche

1. Kühlschrank (1) mit einer Türscharnieranordnung, der aufweist:
eine Kühlschranktür (11, 12), die schwenkbar mit einem Hauptkörper (10) des Kühlschranks (1) gekoppelt ist und mit wenigstens einer Nut (151, 152, 153) versehen ist; und
eine Scharniereinheit (100), die ermöglicht, dass die Kühlschranktür (11, 12) schwenkt, wobei die Scharniereinheit (100) aufweist:
einen Scharnierstift (114), der eine Schwenkachse der Kühlschranktür (11, 12) bereitstellt; und
ein Hakenelement (115), das auf einer Seite des Scharnierstifts (114) bereitgestellt und in der wenigstens einen Nut (151, 152, 153) eingesetzt und verhakt ist,
**dadurch gekennzeichnet, dass** die wenigstens eine Nut (151, 152, 153) eine Einsetznut (151) aufweist, in welche der Scharnierstift (114) und das Hakenelement (115) während der Montage eingesetzt werden,
einen Haken (153), der mit einer Hakenrippe (154) versehen ist, die auf dem Hakenelement (115) verhakt ist, und
eine Verbindungsnut (152), welche die Einsetznut (151) mit der Hakennut (153) in Verbindung bringt, wobei die Einsetznut (151), die Verbindungsnut (152) und die Hakennut (153) von einer oberen Oberfläche der Kühlschranktür (11, 12) nach unten gedrückt werden, und
wobei der Scharnierstift (114) sich während der Montage über die Verbindungsnut (152) von der Einsetznut (151) seitwärts zu der Hakennut (153) bewegt und das Hakenelement (115) auf der Hakenrippe (154) verhakt wird.

2. Türscharnieranordnung nach Anspruch 1, wobei das Hakenelement (115) sich von dem Scharnierstift (114) nach außen erstreckt.

3. Türscharnieranordnung nach Anspruch 1, wobei das Hakenelement (115) derart ausgebildet ist, dass es einen Außenumfang eines unteren Endes des Scharnierstifts (114) umgibt.

4. Türscharnieranordnung nach Anspruch 1, wobei untere Oberflächen der Einsetznut (151) und der Hakennut (153) auf einer gleichen Horizontalebene sind.

5. Türscharnieranordnung nach Anspruch 1, wobei die Hakenrippe (154) sich von einem Innenumfang der Hakennut (153) und entlang von diesem erstreckt.

6. Türscharnieranordnung nach Anspruch 1, wobei das Hakenelement (115) einen unteren Abschnitt der Hakenrippe (154) hält, wenn die Kühlschranktür (11, 12) schwenkbar mit dem Hauptkörper (10) gekoppelt ist.

7. Türscharnieranordnung nach Anspruch 1, wobei das Hakenelement (115), wenn der Scharnierstift (114) vollkommen in die Hakennut (153) eingesetzt ist, unter der Hakenrippe (154) positioniert wird, so dass die Scharniereinheit (110) mit der Kühlschranktür (11, 12) montiert wird.

## Revendications

1. Réfrigérateur (1) avec un ensemble de charnière de porte, comprenant :
une porte de réfrigérateur (11, 12) couplée de manière pivotante à un corps principal (10) du réfrigérateur (1) et pourvue d'au moins une rainure (151, 152, 153) ; et
une unité de charnière (100) permettant à la porte de réfrigérateur (11, 12) de pivoter, dans lequel l'unité de charnière (100) comprend :
une broche de charnière (114) fournissant un axe de pivotement de la porte de réfrigérateur (11, 12) ; et
un élément de crochet (115) prévu sur un côté de la broche de charnière (114) et inséré et accroché dans l'au moins une rainure (151, 152, 153),
**caractérisé en ce que** l'au moins une rainure (151, 152, 153) comprend une rainure d'insertion (151) dans laquelle la broche de charnière (114) et l'élément de crochet (115) sont insérés pendant l'assemblage, une rainure de crochet (153) pourvue d'une nervure de crochet (154) accrochée à l'élément de crochet (115), et
une rainure de connexion (152) faisant communiquer la rainure d'insertion (151) avec la rainure de crochet (153), la rainure d'insertion (151), la rainure de connexion (152) et la rainure de crochet (153) étant enfoncées vers le bas à partir d'une surface supérieure de la porte de réfrigérateur (11, 12), et
dans lequel, pendant l'assemblage, la broche de charnière (114) se déplace latéralement de la rainure d'insertion (151) à la rainure de crochet (153), via la rainure de connexion (152), et l'élément de crochet (115) est accroché à la nervure de crochet (154).

2. Ensemble de charnière de porte selon la revendication 1, dans lequel l'élément de crochet (115) s'étend vers l'extérieur à partir de la broche de charnière (114).

3. Ensemble de charnière de porte selon la revendication 1, dans lequel l'élément de crochet (115) est formé pour entourer une circonférence extérieure d'une extrémité inférieure de la broche de charnière (114).

4. Ensemble de charnière de porte selon la revendication 1, dans lequel des surfaces de fond de la rainure d'insertion (151) et de la rainure de crochet (153) sont sur un même plan horizontal.

5. Ensemble de charnière de porte selon la revendication 1, dans lequel la nervure de crochet (154) s'étend à partir et le long d'une circonférence intérieure de la rainure de crochet (153).

6. Ensemble de charnière de porte selon la revendication 1, dans lequel l'élément de crochet (115) supporte une portion inférieure de la nervure de crochet (154) lorsque la porte de réfrigérateur (11, 12) est couplée de manière pivotante au corps principal (10).

7. Ensemble de charnière de porte selon la revendication 1, dans lequel, lorsque la broche de charnière (114) est complètement insérée dans la rainure de crochet (153), l'élément de crochet (115) est positionné sous la nervure de crochet (154), de sorte que l'unité de charnière (100) soit assemblée avec la porte de réfrigérateur (11, 12).
